# EUROPÄISCHE PATENTSCHRIFT

(11) **EP 1 245 377 B1**
(45) Veröffentlichungstag und Bekanntmachung des Hinweises auf die Patenterteilung: **20.07.2005**
(21) Anmeldenummer: 01107633.8
(22) Anmeldetag: 28.03.2001
(51) Int. Cl.: B32B 1/08, B32B 27/32, B32B 25/14, F16L 11/127, F16L 9/12

(54) **Mehrschichtige Fluidleitung zur Anwendung in Kraftfahrzeugen**
Multilayered fluid conduit for use in vehicles
Conduit de fluide stratifié pour véhicule automobile

(43) Veröffentlichungstag der Anmeldung: 02.10.2002
(73) Patentinhaber: Rasmussen GmbH, 63477 Maintal (DE)
(72) Erfinder: Kertesz, Janos, 65719 Hofheim (DE)
(74) Vertreter: Knoblauch, Andreas, Dr.-Ing.

(56) Entgegenhaltungen:
- EP-A- 0 470 606
- WO-A-93/09948
- GB-A- 2 335 389
- DATABASE WPI Section Ch, Week 199440 Derwent Publications Ltd., London, GB; Class A17, AN 1994-321815 XP002176987 & JP 06 246887 A (TOKAI RUBBER IND LTD), 6. September 1994 (1994-09-06)
- DATABASE WPI Section Ch, Week 199615 Derwent Publications Ltd., London, GB; Class A18, AN 1996-146991 XP002176988 & JP 08 034886 A (TOKAI RUBBER IND LTD), 6. Februar 1996 (1996-02-06)

## Beschreibung

Die Erfindung bezieht sich auf eine mehrschichtige Fluidleitung zur Anwendung in Kraftfahrzeugen, mit einer ersten Schicht und einer die erste Schicht umgebenden zweiten Schicht, wobei die erste und die zweite Schicht im wesentlichen aus thermoplastischem Kunststoff bestehen und stoffschlüssig verbunden sind und der thermoplastische Kunststoff der ersten Schicht mit elektrisch leitfähigen Teilchen vermischt ist.

Eine mehrschichtige Fluidleitung dieser Art ist aus der DE 198 31 898 A1 bekannt. Sie wird hauptsächlich für flüssige Kraftstoffe, wie Benzin oder Dieselöl, verwendet, ist aber auch für andere kohlenwasserstoffhaltige, insbesondere alkoholhaltige, Fluide geeignet, z.B. für Bremsflüssigkeiten oder glykolhaltiges Kühlwasser. Wenn solche Fluide Wasser und/oder Alkohol enthalten, kann gegebenenfalls der thermoplastische Kunststoff bei langzeitiger Berührung mit diesen Fluiden und höherer Temperatur hydrolytisch abgebaut werden und verspröden.

Der Erfindung liegt daher die Aufgabe zugrunde, eine mehrschichtige Fluidleitung der eingangs genannten Art anzugeben, bei der die Langzeitelastizität und -flexibilität auch bei höheren Temperaturen von bis zu mindestens 90°C bei einer Beaufschlagung mit einem kohlenwasserstoffhaltigen Fluid, wie flüssigem Kraftstoff und Kraftstoffdämpfen, erhalten bleibt.

Erfindungsgemäß ist diese Aufgabe dadurch gelöst, daß der Kunststoff der ersten Schicht ein funktionalisiertes vernetztes Polyolefin oder ein funktionalisiertes vernetztes thermoplastisches Elastomer ist.

Diese Kunststoffe haben den Vorteil, daß sie auch nach langzeitiger Lagerung in Kraftstoffen bei Temperaturen von bis zu 90°C nicht verspröden. Die Vernetzung erhöht die thermische Belastbarkeit auf bis zu 150°C , zumindest kurzzeitig, und die Chemikalienbeständigkeit.

Bei der Funktionalisierung werden weitere Monomere mit bestehenden Makromolekülen (Polymeren) durch Pfropfung verbunden. Dadurch entsteht ein neues Polymer, d.h. entweder ein Copolymer oder ein Terpolymer, und das neue Polymer hat dann neue funktionelle Endgruppen. Diese Endgruppen sind dann in der Lage, in der Schmelze während einer weiteren Verarbeitung bei höherer Temperatur sich mit anderen Endgruppen von chemisch unterschiedlichen Polymeren, wie Polyamid oder thermoplastisches Polyester, zu verbinden. Dadurch kann erreicht werden, daß sich zwischen zwei unterschiedlichen geschmolzenen Materialien eine stoffschlüssige Verbindung und Haftung ergibt.

Vorzugsweise ist dafür gesorgt, daß das funktionalisierte vernetzte Polyolefin wenigstens eines aus einer ersten Gruppe ist, die aus einem Polyolefinhomopolymer, einem Polyolefincopolymer, einem Polyolefinterpolymer, einem anhydridgepfropften Polyolefin, einem glycidilmethacrylatgepfropften Polyolefin, einem maleinsäuregepfropften Polyolefin und einem elastomermodifizierten Polyolefin besteht.

Ferner kann dafür gesorgt sein, daß das funktionalisierte vernetzte thermoplastische Elastomer im wesentlichen ein Material aus einer Gruppe ist, die Polyamide, Polyester, glycidilmethacrylatgeprofpfte Elastomere, maleinsäuregepfropfte Elastomere und funktionalisierte Kautschucke, insbesondere Acrylnitril-Butadien-Kautschuk (NBR), hydrierten Acrylnitril-Butadien-Kautschuk (HNBR) und Ethylen-Propylen-Terpolymer (EPDM), enthält.

Sodann ist es vorteilhaft, wenn der Kunststoff der zweiten Schicht wenigstens einer aus einer zweiten Gruppe ist, die aus einem Polyolefin, einem Polyamid, einem thermoplastischen Polyester, einem Polyacetal, einem Polyetherketon, einem Fluorthermoplast, einem Polyesterelastomer und einem thermoplastischen Elastomer besteht.

Eine weitere Möglichkeit besteht darin, daß der Kunststoff der ersten Schicht mit wenigstens einem Kunststoff der zweiten Schicht vermischt ist.

Ferner ist es günstig, wenn die zweite Schicht mit einer sie umgebenden dritten Schicht stoffschlüssig verbunden ist, die im wesentlichen thermoplastischen Kunststoff aufweist, der aus wenigstens einem der ersten oder zweiten Schicht besteht.

Auch die dritte Schicht kann mit einer sie umgebenden vierten Schicht stoffschlüssig verbunden sein, die im wesentlichen thermoplastischen Kunststoff aufweist, der aus wenigstens einem Kunststoff der ersten oder zweiten Schicht besteht.

Die Erfindung und ihre Weiterbildungen werden nachstehend anhand der beigefügten Zeichnungen bevorzugter Ausführungsbeispiele näher beschrieben. Es zeigen:

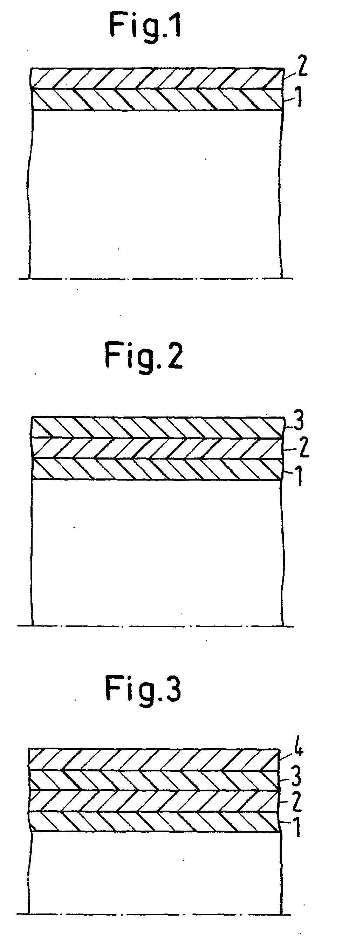

- Fig. 1 bis 3: jeweils einen Ausschnitt aus einem Axialschnitt von drei Ausführungsbeispielen einer erfindungsgemäßen mehrschichtigen Fluidleitung.
Die Fluidleitung nach Fig. 1 wird für brennbare Kraftstoffe in Kraftfahrzeugen verwendet, insbesondere für Benzin oder Dieselöl, sie kann aber auch für Bremsflüssigkeiten oder alkoholhaltige Kühlflüssigkeiten verwendet werden.

Die Fluidleitung besteht aus einer ersten Schicht 1 und einer die erste Schicht 1 umgebenden zweiten Schicht 2. Beide Schichten bestehen im wesentlichen aus thermoplastischem Kunststoff und sind stoffschlüssig miteinander verbunden. Die erste Schicht 1 ist zusätzlich mit elektrisch leitfähigen Teilchen vermischt, um eine elektrostatische Aufladung der Fluidleitung und damit die Feuergefahr durch Funkenbildung zu vermeiden.

Der thermoplastische Kunststoff der ersten Schicht 1 ist ein funktionalisiertes vernetztes Polyolefin oder ein funktionalisiertes vernetztes Elastomer. Die Verwendung von vernetztem Polyolefin erhöht die thermische Belastbarkeit bei langzeitiger Berührung mit solchen Kraftstoffen, Bremsflüssigkeiten oder Kühlwasser. Insbesondere wird ein hydrolytischer Abbau und damit eine Versprödung des Materials der innen liegenden ersten Schicht vermieden, soweit das Fluid auch Wasser enthält. Die Verwendung eines vernetzten thermoplastischen Elastomers in der ersten Schicht erhöht die Flexibilität und Elastizität der Fluidleitung. Durch die Funktionalisierung des Polyolefins oder Elastomers kann ein neues Polymer gebildet werden, d.h. entweder ein Copolymer oder ein Terpolymer, das dann neue funktionelle Endgruppen besitzt. Die Endgruppen können sich dann bei weiterer Verarbeitung in der Schmelze und höherer Temperatur mit anderen Endgruppen von chemisch unterschiedlichen Polymeren verbinden, z.B. mit einem Polyamid oder einem thermoplastischen Polyester. Dadurch kann man erreichen, daß sich zwischen zwei unterschiedlichen geschmolzenen Materialien eine stoffschlüssige Verbindung und Haftung ergibt.

Besonders geeignet ist hierfür ein funktionalisiertes vernetztes Polyolefin, das wenigstens eines aus einer ersten Gruppe ist, die aus einem Polyolefinhomopolymer, einem Polyolefincopolymer, einem Polyolefinterpolymer, einem anhydridgepfropften Polyolefin, einem glycidilmethacrylatgepfropften Polyolefin, einem maleinsäuregepfropften Polyolefin und einem elastomermodifizierten Polyolefin besteht.

Bei dem funktionalisierten vernetzten Elastomer kann es sich im wesentlichen um ein Material handeln, das aus einer Gruppe ausgewählt ist, die Polyamide, Polyester, glycidilmethacrylatgeprofpfte Elastomere, maleinsäuregepfropfte Elastomere und funktionalisierte Kautschukke, insbesondere Acrylnitril-Butadien-Kautschuk (NBR), hydrierten Acrylnitril-Butadien-Kautschuk (HNBR) und Ethylen-Propylen-Terpolymer (EPDM), enthält.

Ferner kann auch der Kunststoff der zweiten Schicht 2 wenigstens einer aus einer zweiten Gruppe sein, die aus einem Polyolefin, einem Polyamid, einem thermoplastischen Polyester, einem Polyacetal, einem Polyetherketon, einem Fluorthermoplast, einem Polyesterelastomer und einem thermoplastischen Elastomer besteht. Diese Materialien erhöhen zusätzlich die mechanische und/oder thermische Belastbarkeit bzw. die Elastizität und Biegsamkeit der Fluidleitung.

Eine weitere Möglichkeit besteht darin, daß der Kunststoff der ersten Schicht 1 mit wenigstens einem Kunststoff der zweiten Schicht 2 vermischt ist.

Bei dem Ausführungsbeispiel nach Fig. 2 sind die erste Schicht 1 und die zweite Schicht 2 ebenso wie die erste und die zweite Schicht 1, 2 bei dem Ausführungsbeispiel nach Fig. 1 ausgebildet und stoffschlüssig miteinander verbunden. Die zweite Schicht 2 ist jedoch mit einer sie umgebenden dritten Schicht 3 stoffschlüssig verbunden, die im wesentlichen thermoplastischen Kunststoff aufweist, der aus wenigstens einem der ersten oder zweiten Schicht ausgewählt ist, jedoch von dem Material oder der Materialkombination der zweiten Schicht 2 abweicht.

Die mehrschichtige Fluidleitung nach Fig. 3 enthält die gleichen drei stoffschlüssig miteinander verbundenen Schichten 1, 2 und 3 wie die Fluidleitung nach Fig. 2. Die dritte Schicht 3 ist jedoch mit einer sie umgebenden vierten Schicht 4 stoffschlüssig verbunden, deren Kunststoff aus wenigstens einem der zweiten Gruppe ausgewählt ist, jedoch von dem Kunststoff oder den Kunststoffen der Schicht 3 abweicht.

Die stoffschlüssige Verbindung ist in allen Fällen vorzugsweise eine Schmelzverbindung.

## Patentansprüche

1. Mehrschichtige Fluidleitung zur Anwendung in Kraftfahrzeugen, mit einer ersten Schicht (1) und einer die erste Schicht (1) umgebenden zweiten Schicht (2), wobei die erste und die zweite Schicht (1, 2) im wesentlichen aus thermoplastischem Kunststoff bestehen und stoffschlüssig verbunden sind und der thermoplastische Kunststoff der ersten Schicht (1) mit elektrisch leitfähigen Teilchen vermischt ist, **dadurch gekennzeichnet, daß** der Kunststoff der ersten Schicht (1) ein funktionalisiertes vernetztes Polyolefin oder ein funktionalisiertes vernetztes thermoplastisches Elastomer ist.

2. Fluidleitung nach Anspruch 1, **dadurch gekennzeichnet, daß** das funktionalisierte vernetzte Polyolefin wenigstens eines aus einer ersten Gruppe ist, die aus einem Polyolefinhomopolymer, einem Polyolefincopolymer, einem Polyolefinterpolymer, einem anhydridgepfropften Polyolefin, einem glycidilmethacrylatgepfropften Polyolefin, einem maleinsäuregepfropften Polyolefin und einem elastomermodifizierten Polyolefin besteht.

3. Fluidleitung nach Anspruch 1, **dadurch gekennzeichnet, daß** das funktionalisierte vernetzte thermoplastische Elastomer im wesentlichen ein Material aus einer Gruppe ist, die Polyamide, Polyester, glycidilmethacrylatgeprofpfte Elastomere, maleinsäuregepfropfte Elastomere und funktionalisierte Kautschucke, insbesondere Acrylnitril-Butadien-Kautschuk (NBR), hydrierten Acrylnitril-Butadien-Kautschuk (HNBR) und Ethylen-Propylen-Terpolymer (EPDM), enthält

4. Fluidleitung nach einem der Ansprüche 1 bis 3, **dadurch gekennzeichnet, daß** der Kunststoff der zweiten Schicht (2) wenigstens einer aus einer zweiten Gruppe ist, die aus einem Polyolefin, einem Polyamid, einem thermoplastischen Polyester, einem Polyacetal, einem Polyetherketon, einem Fluorthermoplast, einem Polyesterelastomer und einem thermoplastischen Elastomer besteht.

5. Fluidleitung nach einem der Ansprüche 1 bis 4, **dadurch gekennzeichnet, daß** der Kunststoff der ersten Schicht (1) mit wenigstens einem Kunststoff der zweiten Schicht (2) vermischt ist.

6. Fluidleitung nach einem der Ansprüche 1 bis 4, **dadurch gekennzeichnet, daß** die zweite Schicht (2) mit einer sie umgebenden dritten Schicht (3) stoffschlüssig verbunden ist, die im wesentlichen thermoplastischen Kunststoff aufweist, der aus wenigstens einem der ersten oder zweiten Schicht besteht.

7. Fluidleitung nach Anspruch 6, **dadurch gekennzeichnet, daß** die dritte Schicht (3) mit einer sie umgebenden vierten Schicht (4) stoffschlüssig verbunden ist, die im wesentlichen thermoplastischen Kunststoff aufweist, der aus wenigstens einem Kunststoff der ersten oder zweiten Schicht besteht.

## Claims

1. A multilayer fluid conduit for use in motor vehicles, the fluid conduit comprising a first layer (1); a second layer (2) surrounding the first layer (1), wherein the first and second layers (1,2) are essentially of thermoplastic material and are materially connected to one another, and wherein electrically conductive particles are mixed into the thermoplastic material of the first layer (1), **characterized in that** the plastic material of the first layer (1) is a functionalized cross-linked polyolefin or a functionalized cross-linked thermoplastic elastomer.

2. The fluid conduit according to claim 1, **characterized in that** the funcitonalized cross-linked polyolefin is at least one selected from a first group which consists of a polyolefin homopolymer, a polyolefin copolymer, a polyolefin terpolymer, a anhydride-grafted polyolefin, a glycidil methacrylate-grafted polyolefin, a maleic acid-grafted polyolefin and an elastomer-modified polyolefin.

3. The fluid conduit according to claim 1, **characterized in that** the functionalized cross-linked thermoplastic elastomer is at least one material selected from a group which includes polyamides, polyesters, glycidil methacrylate-grafted elastomers, maleic acid-grafted elastomers and funcitonalized rubbers, particularly acrylonitrile butadiene rubber (NBR), hydrated acrylonitrile butadiene rubber (HNBR) and ethylene-propylene-terpolymer (EPDM).

4. The fluid conduit according to one of the claims 1 to 3, **characterized in that** the plastic material of the second layer (2) is at least one of a second group which consists of a polyolefin, a polyamide, a thermoplastic polyester, a polyacetal, a polyether ketone, a flourothermoplastic material, a polyester elastomer and a thermoplastic elastomer.

5. The fluid conduit according to one of the claims 1 to 4, **characterized in that** the plastic material of the first layer (1) is mixed with at least one plastic material of the second layer (2).

6. The fluid conduit according to one of the claims 1 to 4, **characterized in that** a third layer (3) is materially connected to and surrounding the second layer (2), wherein the third layer (3) is essentially composed of thermoplastic material which is the same as at least one of the thermoplastic materials of the first or second layers.

7. The fluid conduit according to claim 6, **characterized in that** a fourth layer (4) is materially connected and surrounding the third layer (3), wherein the fourth layer (4) is composed essentially of a thermoplastic material which is the same as at least one of the plastic materials of the first or second layers.

## Revendications

1. Conduit de fluide multicouche pour utilisation dans des véhicules automobiles, comportant une première couche (1) et une deuxième couche (2) entourant la première couche (1), la première couche et la deuxième (1, 2) étant essentiellement constituées de matière synthétique thermoplastique et étant assemblées solidement et la matière synthétique thermoplastique de la première couche (1) étant mélangée avec des particules conductrices de l'électricité, **caractérisé en ce que** la matière synthétique de la première couche (1) est une polyoléfine fonctionnalisée réticulée ou un élastomère thermoplastique fonctionnalisé réticulé.

2. Conduit de fluide selon la revendication 1, **caractérisé en ce que** la polyoléfine fonctionnalisée réticulée est au moins l'une d'un premier groupe qui est constitué par un homopolymère polyoléfine, un copolymère de polyoléfine, un terpolymère de polyoléfine, une polyoléfine greffée avec un anhydride, une polyoléfine greffée avec du méthacrylate de glycidyle, une polyoléfine greffée avec de l'acide maléique et une polyoléfine modifiée avec un élastomère.

3. Conduit de fluide selon la revendication 1, **caractérisé en ce que** l'élastomère thermoplastique fonctionnalisé réticulé est essentiellement une substance choisie dans un groupe qui comprend des polyamides, des polyesters, des élastomères greffés avec du méthacrylate de glycidyle, des élastomères greffés avec de l'acide maléique et des caoutchoucs fonctionnalisés, en particulier le caoutchouc acrylonitrile-butadiène (NBR), le caoutchouc acrylonitrile-butadiène hydrogéné (HNBR) et le terpolymère éthylène/propylène (EDPM).

4. Conduit de fluide selon l'une quelconque des revendications 1 à 3, **caractérisé en ce que** la matière synthétique de la deuxième couche (2) est au moins l'une d'un deuxième groupe qui est constitué par une polyoléfine, un polyamide, un polyester thermoplastique, un polyacétal, une polyéthercétone, une matière thermoplastique fluorée, un élastomère polyester et un élastomère thermoplastique.

5. Conduit de fluide selon l'une quelconque des revendications 1 à 4, **caractérisé en ce que** la matière synthétique de la première couche (1) est mélangée avec au moins une matière synthétique de la deuxième couche (2).

6. Conduit de fluide selon l'une quelconque des revendications 1 à 4, **caractérisé en ce que** la deuxième couche (2) est assemblée solidement avec une troisième couche (3) l'entourant, qui comporte essentiellement une matière synthétique thermoplastique qui consiste en au moins l'une de la première ou de la deuxième couche.

7. Conduit de fluide selon la revendication 6, **caractérisé en ce que** la troisième couche (3) est assemblée solidement avec une quatrième couche (4) l'entourant, qui comporte essentiellement une matière synthétique qui consiste en au moins une matière synthétique de la première ou de la deuxième couche.
